# EUROPEAN PATENT SPECIFICATION

(11) **EP 3 575 646 B1**
(45) Date of publication and mention of the grant of the patent: **03.05.2023**
(21) Application number: 19175722.8
(22) Date of filing: 21.05.2019
(51) Int. Cl.: F16K 5/06

(54) **BALL VALVE INSERT, VALVE PART UNIT AND BALL VALVE**
KUGELVENTILEINSATZ, VENTILTEILEINHEIT UND KUGELVENTIL
INSERT DE SOUPAPE À BILLE, UNITÉ DE PIÈCE DE SOUPAPE ET SOUPAPE À BILLE

(30) Priority: 30.05.2018 DK PA201800241
(43) Date of publication of application: 04.12.2019
(73) Proprietor: Danfoss A/S, 6430 Nordborg (DK)
(72) Inventor: BRATKOVIC, Marjan, 6430 Nordborg (DK)
(74) Representative: Stevens, Brian

(56) References cited:
- DE-A1- 2 054 045
- DE-U1-202006 010 374
- US-A- 4 546 790

## Description

### BACKGROUND

A ball valve is a commonly known regulator and includes a ball-shaped valve element with a flow path between two openings, where the ball-shaped valve element possibly simply is hollow to form the flow path. The valve element is positioned within a cavity inside a valve body and aligns with two connected end tubes defining an inlet and outlet respectively for the ball valve, such that in one rotation position the openings align with the tubes forming a flow path from the inlet to the outlet, whereas in a second rotation the sides of the valve element align with the tubes, thus closing off for any flow to pass.

To ensure a sealed connection of the valve element to the tubes, sealing rings are positioned being squeezed between a supporting insert of the sealing ring, and the valve element, and where spring means is inserted pushing the sealing ring. A handle usually is attached to the valve element to induce the rotation.

An example is disclosed in US4546790A showing a fluid valve comprising a valve system means disposed in a central housing portion and comprising at least one valve body, a support means, sealing means, and at least one tolerance absorbing means subject to variable compression whereby said valve system is axially clamped with said tolerance absorbing means under varying compression between said trunconical portions and is operative regardless of production tolerances affecting axial clearance between said trunconical portions, said tolerance absorbing means being plastically deformable and disposed between said trunconical intermediate portions and said valve system, and said deformable means being deformable by assembling forces but non-deformable by valve actuating forces.

In an embodiment not according to the invention, the insert element is adapted to be positioned within a tube reaching between a first end with an opening and a second end with an opening and comprising an inner shape in the inner wall surface of said tube therebetween, such that said insert element is introduced through said second end opening and positioned towards said inner shape that is formed to prevent the insert element from any further movement towards a first end of said tube.

In an embodiment not according to the invention, a valve part unit is formed of the insert element and inserted in said tube, where said tube is formed with a widening section having an increasing internal diameter seen in the direction from the first end to the second end and where a flat section leads from the shoulder to the start of the widening section and has a thinner wall thickness than the neighbouring sections of the tube unit.

In an embodiment according to claim 6 of the invention a ball valve is formed of said two valve part units and positioned with their second end surfaces contacting and enclosing a ball valve element positioned between the respective two supporting shapes each supporting a sealing element that contacts said ball valve element. and where said second end surfaces are fixed together such as by welding or brazing.

By forming the ball valve by such valve part units, the valve body will simply be replaced by tube units themselves.

In an embodiment according to claim 1 of the invention a valve part unit, also referred to as a ball cartridge, is formed of two insert elements each comprising extensions reaching out of the supporting shapes and connected and fixed together, such as by welding or brazing, and where a ball-shaped valve element is confined between said extensions and said outlet sections, and where each of the respective two supporting shapes supports a sealing element that contacts said ball valve element.

Preferably when the insert elements are connected and confine the valve element between them, then the insert elements are compressed such that biasing tension are built into the biasing section pushing the sealings and supporting shapes towards the ball valve element making a sealing connection. In an embodiment, a ball valve is formed of the valve part unit and positioned within a tube reaching between a first end with an opening and a second end with an opening and comprising an inner shape in the inner wall surface of said tube therebetween, where said insert element is introduced through said second end opening and positioned towards said inner shape that is formed to prevent the insert element from any further movement towards a first end of said tube. In an embodiment, said tube is a single tube with a pre-shaped section with a widening section having an increasing internal diameter seen in the direction from the first end to the second end, and an unshaped section. In an embodiment, said unshaped section comprises a recessed portion formed as a recess in the inner side wall of the single tube and including the shoulder, such that when shaping the portion around the valve unit(s) the end second of the ends fits into the shoulder of the recessed portion, this then being the flat section of this single tube section.

In any of the ball valve cartridge embodiments, it is possible to leak test this single unit, before being assembled into a full ball valve. Thus it would be easier and cheaper to replace a malfunctional part.

An embodiment not according to the invention relates to a method of manufacturing a ball valve. This method includes providing an insert element formed as one part as a combined biasing and supporting insert element with an inlet section and outlet section, a supporting shape towards the outlet shaped to support a sealing element, and a biasing section of the insert element intermediate between an inlet and the supporting shape, then inserting it within a tube by a second end such that the outer surface of said inlet is positioned towards an inner shape in the inner wall surface of said tube preventing the insert element from any further movement towards a first end of said tube.

An embodiment not according to the invention relates to a method of manufacturing a ball valve by providing an insert element formed as one part as a combined biasing and supporting insert element with an inlet section and outlet section, a supporting shape towards the outlet shaped to support a sealing element and a biasing section of the insert element intermediate between an inlet and the supporting shape, then providing two valve part units, each formed by inserting an insert element into a tube by a second end such that the outer surface of said inlet is positioned towards an inner shape in the inner wall surface of said tube preventing the insert element from any further movement towards a first end of said tube, and subsequently position the two valve parts together by connecting their second end surfaces and fixing them together, such as by welding or brazing.

An embodiment not according to the invention relates to a method of manufacturing a ball valve by providing an insert element formed as one part as a combined biasing and supporting insert element with an inlet section and outlet section, a supporting shape towards the outlet shaped to support a sealing element, and a biasing section of the insert element intermediate between an inlet and the supporting shape, then providing a valve part unit formed of two insert element connected to a ball-shaped valve element, said two insert elements comprising extensions reaching out of the supporting shapes and adapted to confine the valve element between them, and subsequently inserting it into a tube by a second end such that the outer surface of said inlet is positioned towards an inner shape in the inner wall surface of said tube preventing the insert element from any further movement towards a first end of said tube. In an embodiment not according to the invention, said tube is a single tube with a pre-shaped section with a widening section having an increasing internal diameter seen in the direction from the first end to the second end, and an unshaped section, and subsequent shaping of the unshaped section.

Advantages to any of the embodiments includes there to be less assembly parts to purchase, to transport, to hold on stock etc.

Further, each of the insert and vale part units could apply to a range of different valves to be produced.

Further, less welding etc. is required, thus reducing the production time and cost, but also the possible weak area, thus making it more resistant to internal pressure, this increasing the possible load force.

Further it enables the production of a more compact valve body,

### FIGURES

- Fig. 1: An example of a ball valve according to prior art.
- Fig. 2: An embodiment of a valve part unit formed of a tube and an insert element not according to an embodiment of the invention.
- Fig. 3: An embodiment according to the invention showing two such valve part units connected with a ball-shaped valve element positioned between the two insertion units.
- Fig. 4: An embodiment showing a ball valve constructed by such two valve part units.
- Fig. 5: An embodiment of a valve part unit according to the invention formed as a valve cartridge with two insert elements connected and enclosing a ball-shaped valve element.
- Fig. 6: A single tube with a shaped section and an unshaped section.
- Figs. 7a,b: A ball valve cartridge inserted into a single tube and where an unshaped section subsequently is shaped to confine the ball valve cartridge within.

### DETAILED DESCRIPTION OF THE INVENTION

It should be understood, that the detailed description and specific examples, while indicating embodiments of the invention, are given by way of illustration only, since various changes and modifications within the scope of the claims will become apparent to those skilled in the art from the detailed description.

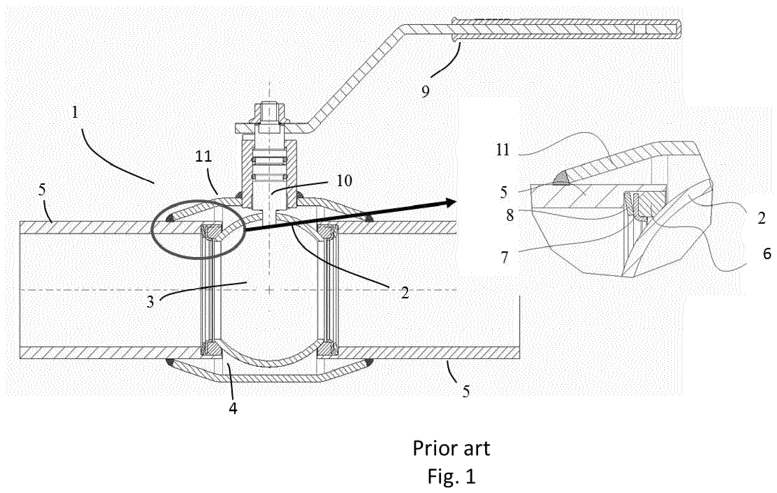

Fig. 1 illustrates a ball valve (1) from prior art, where a ball-shaped valve element (2) having a through bore (3) is retained within the valve cavity (4) of the valve body (11) by the end tubes (5), or welding ends (5), that retain internal fluid pressure and give support to internal parts like the valve element (2) in open and closed position

A sealing ring (6) supported by support ring (7) and a disc spring (8) is positioned between end tubes (5) and valve element (2), such that the disc spring (8) biases the sealing ring (6) against the valve element (2) in a sealing manner. Further, when in closed position, the fluid forces acting on the valve element (2) push it against the sealing ring (6) ensuring further sealing.

The end tubes (5) are fixed such as by welding to the valve body (1) and a handle (9) is connected to a stem (10) fixed to the valve element (2) to make it rotate between open and closed positions by the handle (9).

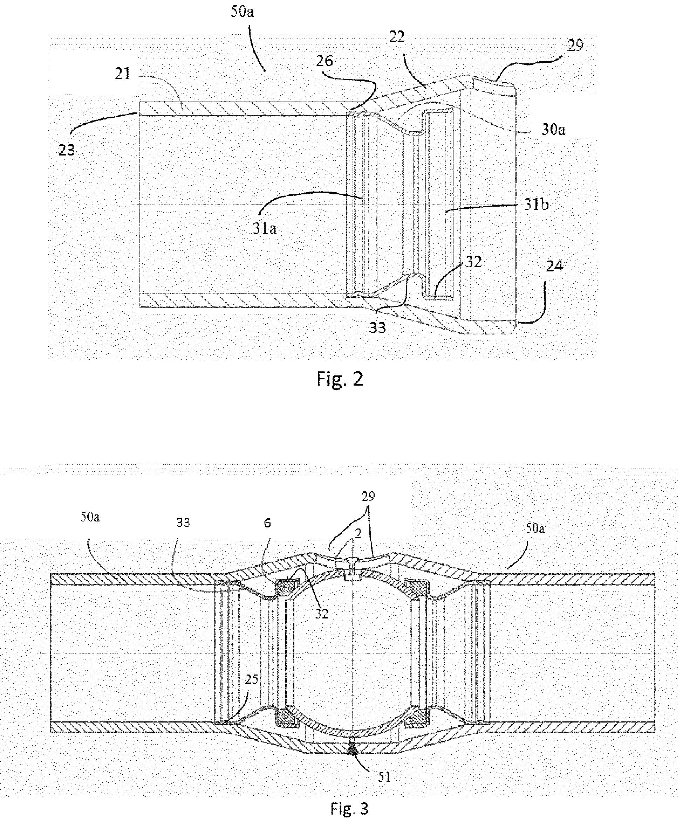

Fig. 2 illustrates a construction element not according to the present invention showing an end tube unit (21) formed with a widening section (22) having an increasing internal diameter seen in the direction from the first end (23) to the second end (24). In the illustration this is a gradual linear increase, but could alternatively be abrupt, curved etc., and change from a first inner diameter d1 to a second inner diameter d2, where d2 is larger than d1.

The inner diameter of the tube unit (21) at the first section seen from the first end (23) to the start of the widening section (22) (where its inner diameter is smallest) may be constant and like the first inner diameter d1, just as the inner diameter seen from the end of the widening section (where its inner diameter is largest) to the second end (24) may be constant and like the second inner diameter d2.

In another embodiment as illustrated, the inner walls of the tube unit (21) in the area around the start of the widening section (22) (where it's at the smallest), a disruption is formed with an inner shoulder (26), or inner step or simply inner shape, in the inner wall forming an enlarged diameter, and where a section (25) leading from the shoulder to the start of the widening section (22) is 'flat' with the first inner diameter d1, thus being slightly larger than the section from the first end (23) to the inner shoulder (26). The tube unit (21) disruption (25) over this section thus has a thinner wall thickness than the neighbouring sections of the tube unit (21), such as by forming a recess in the unshaped pre-tube that subsequently is shaped according to the tube unit (21), and connects the section from the first end (23) to the widening section (22).

A combined biasing and supporting insert element (30a) is inserted into the end tube unit (21), the insert element (30a) forming a passage from its inlet (31a) to outlet (31b), and where the outer diameter at the inlet may be slightly larger than the inner diameter of at least the first end (23) of the tube unit (21). In the illustrated embodiment with the inner shoulder (26) the outer diameter is such that it is larger than the inner diameter of the tube unit in the section from the first end (23) to the shoulder (26), but fits into the section from the shoulder (26) to the start of the widening section (22), thus having an outer diameter being roughly d1.

In more general terms, the inner wall in the tube unit (21) and the first end of the insert element (30a) are shaped such that an inner shape (26) in the tube unit (21) inner wall is formed to match the outer shape of the inlet (31a) end of the insert element (30a), such that when the insert element (30a) is inserted into the tube unit (21) it is securely positioned with its inlet (31a) end at the inner shape (26), being prevented in any further movement in the direction towards the first end (23) of the tube element (21).

The section of the insert element (30a) towards the inlet (31a) may be formed such that when inserted into the tube unit (21) it is being slightly compressed.

A section of the insert element (30a) towards the outlet (31b) is shaped (32) to support a sealing element (6), such as a sealing ring (6), and thus replaces the support ring (7) with the same role.

A section (33) of the insert element (30a) between the inlet (31a) and the shape (32) is a biasing form (33) defined as having a build in biasing, or spring, ability.

The tube unit (21) in an area towards the second end (24) may be formed with a recess (29) in its wall.

Fig. 2 shows a first embodiment of a valve part unit (50a) according to the present invention formed of the insert element (30a) inserted into the tube unit (21).

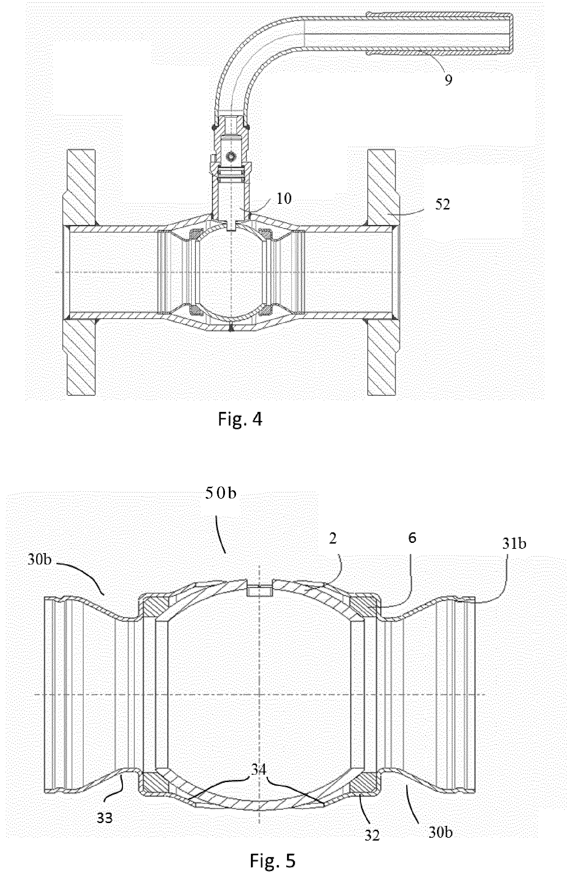

Figs. 3 and 4 illustrate how a ball valve (1) is constructed by two such valve part units (50a) positioned to enclose the (ball-shaped) valve element (2). The sealing elements (6) are positioned in the support shapes (32) and contact the valve element (2) for sealing. The length of the insert elements (30a) is such that the valve part units (50a) are connected, then tension is stored in their biasing forms (33), such that they are pushing the sealing elements (6) towards and squeezing it against the valve element (2).

When connected at the second end (24) surfaces the valve part units (50a) are fixed together such as by brazing, welding (51) etc. at the circumference, and as seen in fig. 4, through the opening formed by the connected two recesses (29) the handle (9) is connected to a stem (10) being fixed to the valve element (2). Further included may be is a packing box and sealing elements.

Illustrated is further an embodiment of flanges (52) connected to the end tubes (21), which may or may not be connected to any of the embodiments according to the present invention.

Fig. 5 illustrates an embodiment according to the invention of a valve part unit (50b), which includes insert elements (30b) connected to the ball-shaped valve element (2), the valve part unit (50b) could also be referred to as a ball cartridge (50b). The two insert elements (30b) in the illustrated embodiment comprise extensions (34) reaching out of the supporting shapes (32) of the sealing elements (6) and adapted to confine the valve element (2) between them. The extensions (34) of the two insert elements (30b) are fixed together (e.g. by welding, brazing etc) thus forming a stable ball cartridge (50b) that thus could be tested for leakage before assembling into final ball valve product.

The final ball valve (1) then could be formed by positioning the ball cartridge (50b) within two tube units (21) in the same manner as explained in relation to figures 2-4.

An alternative assembly of the ball cartridge (50b) could be forming the insert element (30b) as one tubular piece, possibly pre-shaped according to the description of fig. 5 at the one half, positioning the ball-shaped valve element (2) within it, and then subsequently shaping either both halves or the unshaped half around the valve element (2) to the shape of fig. 5.

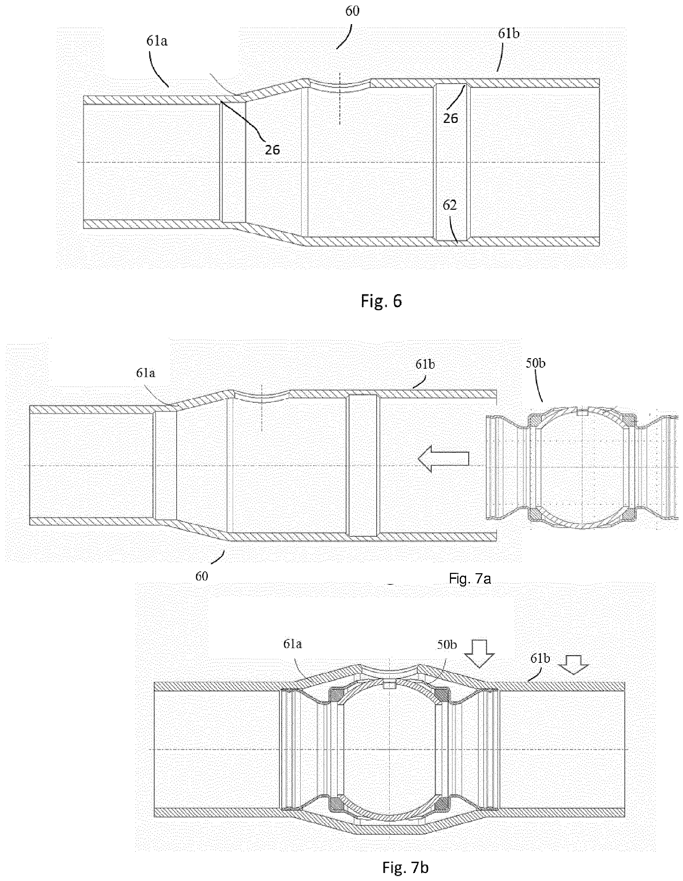

Fig. 6 shows an alternative embodiment to the construction of two tube units (21) only a single tube (60) pre-shaped at the one section (61a) (the pre-shaped section, possibly being a first half of the tube (60)) in the same manner as described in relation to figure 2, but unshaped at the second section (61b) (the unshaped section, possibly being a second half of the tube (60)). The ball cartridge (50b) of the embodiment of fig. 5, or the individual pieces (30a, 6, 2, 6, 30a) of the embodiment of figures 2 and 3 is or are introduced into the one opening of the un-shaped single tube (60) until the end (23) reaches the shoulder (26) of the pre-shaped section (61a).

In the illustrated embodiment, the unshaped section (61b) then comprises a disruption portion (62) including the shoulder (26) of this second section, where said disruption portion (62) is formed as a recess in the inner side wall of the single tube (60). When shaping the portion around the valve part unit(s) (50a, 50b) the end second of the ends (23) fits into the shoulder (26) of the disruption portion (62).

Fig. 7a illustrates said tube (60) being a single tube (60) where a valve part unit being a ball cartridge (50b) is inserted into the opening of the unshaped section (61b), which subsequently is shaped according to the shaped section (61a), thus fixing the ball cartridge (50b), the single tube (60) thus forming the valve body.

## Claims

1. Valve part unit (50b) for a ball valve (1), the valve part unit (50b) being formed of a ball-shaped valve element (2) and two insert elements (30b), where said insert elements (30b) are each a combined biasing and supporting insert element (30b) formed in one piece comprising
- an inlet section (31a) in fluid connection to an outlet section (31b) by an inner flow path,
- a supporting shape (32) towards the outlet section (31b) shaped to support a sealing element (6), and
- a biasing section (33) of the insert element (30b) intermediate between the inlet section (31a) and the supporting shape (32), **characterized in that** each insert element (30b) comprises extensions (34) reaching out of the supporting shapes (32) and connected and fixed together, such as by welding or brazing, and where said ball-shaped valve element (2) is confined between said extensions (34) and said outlet sections (31b), and where each of the respective two supporting shapes (32) supports a sealing element (6) that contacts said ball valve element (2)

2. Valve part unit (50b) according to claim 1, wherein when the insert elements (30b) are connected and confine the valve element (2) between them, then the insert elements (30b) are compressed such that biasing tension is built into the biasing section (33) pushing the sealing elements (6) and supporting shapes (32) towards the ball valve element (2).

3. Ball valve (1) formed of a tube (60) and the valve part unit (50b) according to claim 1 the valve part unit (50b) being positioned within the tube (60) reaching between a first end with an opening and a second end with an opening and comprising an inner shape (26) in the inner wall surface of said tube (60) therebetween, where said insert element (30b) is introduced through said second end opening and positioned towards said inner shape (26) that is formed to prevent the insert element (30b) from any further movement towards a first end of said tube (60).

4. Ball valve (1) according to claim 3, wherein said tube is a single tube (60) with a pre-shaped section (61a) with a widening section having an increasing internal diameter seen in the direction from the first end to the second end, and an unshaped section (61b).

5. Ball valve (1) according to claim 4, wherein the unshaped section (61b) comprises a recessed portion (62) formed as a recess in the inner side wall of the single tube (60) and including the inner shape (26), such that when shaping the portion around the valve unit (50b) the end second of the ends fits into the inner shape (26) of the recessed portion (62), this then being a flat section of this single tube (60) section.

6. Ball valve (1) formed of two valve part units (50a) each formed of a a tube (21) and a combined biasing and supporting insert element (30a) the insert element being formed in one piece and comprising
- an inlet section (31a) in fluid connection to an outlet section (31b) by an inner flow path,
- a supporting shape (32) towards the outlet section (31b) shaped to support a sealing element (6), and
- a biasing section (33) of the insert element (30a) intermediate between the inlet section (31a) and the supporting shape (32),
where each of said insert elements (30a) is inserted into said tube (21) reaching between a first end (23) with an opening and a second end (24) with an opening and comprising an inner shape (26) in the inner wall surface of said tube (21) therebetween, such that said insert element (30a) is introduced through said second end (24) opening and positioned towards said inner shape (26) that is formed to prevent the insert element (30a) from any further movement towards a first end (23) of said tube (21), and where said tube (21) is formed with a widening section (22) having an increasing internal diameter seen in the direction from the first end (23) to the second end (24) and where a flat section (25) leads from the inner shape (26) to the start of the widening section (22) and has a thinner wall thickness than the neighbouring sections of the tube (21), **characterized in that** the ball valve (1) is formed of two valve part units (50a) positioned with their second end (24) surfaces contacting and enclosing a ball valve element (2) positioned between the respective two supporting shapes (32) each supporting a sealing element (6) that contacts said ball valve element (2), and where said second end surfaces (24) are fixed together such as by welding or brazing.

## Patentansprüche

1. Ventilteileinheit (50b) für ein Kugelventil (1), wobei die Ventilteileinheit (50b) aus einem kugelförmigen Ventilelement (2) und zwei Einsatzelementen (30b) gebildet ist,
wobei die Einsatzelemente (30b) jeweils ein in einem Stück gebildetes kombiniertes Vorspann- und Träger-Einsatzelement (30b) sind, umfassend
- einen Einlassabschnitt (31a), durch einen inneren Strömungsweg in Fluidverbindung mit einem Auslassabschnitt (31b),
- eine Trägerform (32) in Richtung zu dem Auslassabschnitt (31b), die zum Tragen eines Dichtelements (6) geformt ist, und
- einen Vorspannabschnitt (33) des Einsatzelements (30b) zwischen dem Einlassabschnitt (31a) und der Trägerform (32),
**dadurch gekennzeichnet, dass** jedes Einsatzelement (30b) Verlängerungen (34) umfasst, die aus den Trägerformen (32) vorstehen und miteinander verbunden und aneinander befestigt sind, wie z.B. durch Schweißen oder Löten, und wobei das kugelförmige Ventilelement (2) zwischen den Verlängerungen (34) und den Auslassabschnitten (31b) eingeschlossen ist, und wobei jeder der entsprechenden beiden Trägerformen (32) ein Dichtelement (6) trägt, das mit dem Kugelventilelement (2) in Kontakt steht.

2. Ventilteileinheit (50b) gemäß Anspruch 1, wobei, wenn die Einsatzelemente (30b) verbunden sind und das Ventilelement (2) zwischen sich einschließen, die Einsatzelemente (30b) komprimiert werden, so dass eine Vorspannung in dem Vorspannungsabschnitt (33) aufgebaut wird, die die Dichtelemente (6) und die Trägerformen (32) in Richtung zu dem Kugelventilelement (2) drückt.

3. Kugelventil (1) gebildet aus einem Rohr (60) und der Ventilteileinheit (50b) gemäß Anspruch 1,
wobei die Ventilteileinheit (50b) innerhalb des Rohrs (60) angeordnet ist, das zwischen einem ersten Ende mit einer Öffnung und einem zweiten Ende mit einer Öffnung reicht und eine dazwischenliegende innere Form (26) in der Innenwandoberfläche des Rohrs (60) umfasst, wobei das Einsatzelement (30b) durch die zweite Endöffnung eingeführt und in Richtung zu der inneren Form (26) angeordnet ist, die gebildet ist, um weitere Bewegung des Einsatzelements (30b) in Richtung zu einem ersten Ende des Rohrs (60) zu verhindern.

4. Kugelventil (1) gemäß Anspruch 3, wobei das Rohr ein einzelnes Rohr (60) mit einem vorgeformten Abschnitt (61a) mit einem weiter werdenden Abschnitt, der einen in der Richtung von dem ersten Ende zu dem zweiten Ende gesehen zunehmenden Innendurchmesser aufweist, und einem ungeformten Abschnitt (61b) ist.

5. Kugelventil (1) gemäß Anspruch 4, wobei der ungeformte Abschnitt (61b) einen vertieften Teil (62) umfasst, der als eine Vertiefung in der Innenwand des einzelnen Rohrs (60) gebildet ist und die innere Form (26) einschließt, so dass, wenn die Form des Teils um die Ventileinheit (50b) und das Ende des zweiten Endes in die innere Form (26) des vertieften Teils (62) passen, dies dann ein flacher Abschnitt dieses Abschnitts des einzelnen Rohrs (60) ist.

6. Kugelventil (1), gebildet aus zwei Ventilteileinheiten (50a), die jeweils aus einem Rohr (21) und einem kombinierten Vorspann- und Träger-Einsatzelement (30a) gebildet sind, wobei das Einsatzelement in einem Stück gebildet ist und umfasst:
- einen Einlassabschnitt (31a), durch einen inneren Strömungsweg in Fluidverbindung mit einem Auslassabschnitt (31b),
- eine Trägerform (32) in Richtung zu dem Auslassabschnitt (31b), die zum Tragen eines Dichtelements (6) geformt ist, und
- einen Vorspannabschnitt (33) des Einsatzelements (30a) zwischen dem Einlassabschnitt (31a) und der Trägerform (32),
wobei jedes der Einsatzelemente (30a) in das Rohr (21) eingeführt ist, das zwischen einem ersten Ende (23) mit einer Öffnung und einem zweiten Ende (24) mit einer Öffnung reicht und eine dazwischenliegende innere Form (26) in der Innenwandoberfläche des Rohrs (21) umfasst, so dass das Einsatzelement (30a) durch die Öffnung des zweiten Endes (24) eingeführt und in Richtung zu der inneren Form (26) angeordnet ist, die gebildet ist, um weitere Bewegung des Einsatzelements (30a) in Richtung zu einem ersten Ende (23) des Rohrs (21) zu verhindern, und wobei das Rohr (21) mit einem weiter werdenden Abschnitt (22) gebildet ist, der einen in der Richtung von dem ersten Ende (23) zu dem zweiten Ende (24) gesehen zunehmenden Innendurchmesser aufweist, und wobei ein flacher Abschnitt (25) von der inneren Form (26) zu dem Beginn des weiter werdenden Abschnitts (22) führt und eine dünnere Wandstärke als die benachbarten Abschnitte des Rohrs (21) aufweist, **dadurch gekennzeichnet, dass** das Kugelventil (1) aus zwei Ventilteileinheiten (50a) gebildet ist, die mit den Oberflächen ihres zweiten Endes (24) mit einem Kugelventilelement (2) in Kontakt stehen und es einschließen, welches zwischen den entsprechenden beiden Trägerformen (32) angeordnet ist, die jeweils ein Dichtelement (6) tragen, das mit dem Kugelventilelement (2) in Kontakt steht, und wobei die zweiten Endoberflächen (24) aneinander befestigt sind, wie z.B. durch Schweißen oder Löten.

## Revendications

1. Unité de pièce de soupape (50b) pour une soupape à bille (1), l'unité de pièce de soupape (50b) étant formée d'un élément de soupape en forme de bille (2) et de deux éléments d'insertion (30b),
lesdits éléments d'insertion (30b) étant chacun un élément d'insertion combinant sollicitation et support (30b), formé d'une seule pièce comprenant :
- une section d'entrée (31a) en communication fluidique avec une section de sortie (31b) par une voie d'écoulement interne,
- une forme de support (32) vers la section de sortie (31b) mise en forme pour supporter un élément d'étanchéité (6), et
- une section de sollicitation (33) de l'élément d'insertion (30b) intermédiaire entre la section d'entrée (31a) et la forme de support (32), **caractérisée par le fait que** chaque élément d'insertion (30b) comprend des extensions (34) sortant des formes de support (32) et reliées et fixées ensemble, par exemple par soudage ou brasage, et que ledit élément de soupape en forme de bille (2) est confiné entre lesdites extensions (34) et lesdites sections de sortie (31b), et que chacune des deux formes de support respectives (32) supporte un élément d'étanchéité (6) qui entre en contact avec ledit élément de soupape à bille (2).

2. Unité de pièce de soupape (50b) selon la revendication 1, lorsque les éléments d'insertion (30b) sont reliés et confinent l'élément de soupape (2) entre eux, les éléments d'insertion (30b) étant comprimés de telle sorte qu'une tension de sollicitation est créée dans la section de sollicitation (33), poussant les éléments d'étanchéité (6) et les formes de support (32) vers l'élément de soupape à bille (2).

3. Soupape à bille (1) formée d'un tube (60) et de l'unité de pièce de soupape (50b) selon la revendication 1,
l'unité de pièce de soupape (50b) étant positionnée à l'intérieur du tube (60) s'étendant entre une première extrémité avec une ouverture et une seconde extrémité avec une ouverture et comprenant une forme intérieure (26) dans la surface de paroi intérieure dudit tube (60) entre les deux, ledit élément d'insertion (30b) étant introduit à travers ladite ouverture de seconde extrémité et positionné vers ladite forme intérieure (26) qui est formée pour empêcher l'élément d'insertion (30b) de tout mouvement ultérieur vers une première extrémité dudit tube (60).

4. Soupape à bille (1) selon la revendication 3, ledit tube étant un tube unique (60) avec une section préformée (61a) avec une section d'élargissement ayant un diamètre interne croissant vu dans la direction de la première extrémité vers la seconde extrémité, et une section non mise en forme (61b).

5. Soupape à bille (1) selon la revendication 4, la section non mise en forme (61b) comprenant une partie évidée (62) formée comme un renfoncement dans la paroi latérale intérieure du tube unique (60) et comprenant la forme intérieure (26), de sorte que lors de la mise en forme de la portion autour de l'unité de soupape (50b), la seconde extrémité des extrémités s'ajustant dans la forme intérieure (26) de la partie évidée (62), celle-ci étant alors une section plate de cette section de tube unique (60).

6. Soupape à bille (1) formée de deux unités de pièce de soupape (50a), chacune formée d'un tube (21) et d'un élément d'insertion combinant sollicitation et support (30a), l'élément d'insertion étant formé d'une seule pièce et comprenant :
- une section d'entrée (31a) en communication fluidique avec une section de sortie (31b) par une voie d'écoulement interne,
- une forme de support (32) vers la section de sortie (31b) mise en forme pour supporter un élément d'étanchéité (6), et
- une section de sollicitation (33) de l'élément d'insertion (30a) intermédiaire entre la section d'entrée (31a) et la forme de support (32),
chacun desdits éléments d'insertion (30a) étant inséré dans ledit tube (21) s'étendant entre une première extrémité (23) avec une ouverture et une seconde extrémité (24) avec une ouverture et comprenant une forme intérieure (26) dans la surface de paroi intérieure dudit tube (21) entre les deux, de sorte que ledit élément d'insertion (30a) est introduit à travers ladite ouverture de seconde extrémité (24) et positionné vers ladite forme intérieure (26) qui est formée pour empêcher l'élément d'insertion (30a) de tout mouvement ultérieur vers une première extrémité (23) dudit tube (21), et ledit tube (21) étant formé d'une section d'élargissement (22) ayant un diamètre interne croissant dans la direction de la première extrémité (23) vers la seconde extrémité (24) et une section plate (25) allant de la forme intérieure (26) au début de la section d'élargissement (22) et ayant une épaisseur de paroi plus fine que les sections voisines du tube (21), **caractérisée en ce que** la soupape à bille (1) est formée de deux unités de pièce de soupape (50a) positionnées avec leurs secondes surfaces d'extrémité (24) en contact et enfermant un élément de soupape à bille (2) positionné entre les deux formes de support respectives (32) supportant chacune un élément d'étanchéité (6) qui entre en contact avec ledit élément de soupape à bille (2), et lesdites secondes surfaces d'extrémité (24) étant fixées ensemble, par exemple par soudage ou brasage.
